# EUROPÄISCHE PATENTANMELDUNG

(11) **EP 1 817 994 A2**
(43) Veröffentlichungstag der Anmeldung: **15.08.2007**
(21) Anmeldenummer: 06026360.5
(22) Anmeldetag: 19.12.2006
(51) Int. Cl.: A47J 42/04, A47J 42/08

(54) **Mühle zum Zerkleinern von Gewürzen**

(30) Priorität: 08.02.2006 DE 202006001997 U
(71) Anmelder: STOHA DESIGN RICHARD HIEBER KG, 86928 Hofstetten (DE)
(72) Erfinder: Ellerstorfer, Thomas, 93413 Cham (DE)
(74) Vertreter: Jordan, Volker Otto Wilhelm

(57) **Zusammenfassung**

Die Erfindung betrifft eine Mühle (10) zum Zerkleinern von Gewürzen, insbesondere von Pfeffer, Salz oder dergleichen, umfassend: einen Aufnahmebehälter (12) für ungemahlenes Gewürz; ein in dem Aufnahmebehälter (12) drehbar angeordnetes, eine Drehachse definierendes Stabelement (44); einen relativ zum Aufnahmebehälter (12) drehbar angeordneten Mühlenkopf (18), welcher mit dem Stabelement (44) zur gemeinsamen Drehung gekoppelt oder koppelbar ist; ein vom Mühlenkopf (18) entfernt angeordnetes Mahlwerk (54) mit wenigstens zwei relativ zueinander beweglichen Mahlelementen (56, 58), von denen wenigstens eines (56) vermittels des Stabelements (44) relativ zu wenigstens einem anderen (58) der Mahlelemente verdrehbar ist; und eine Einstellvorrichtung (26) zur Einstellung einer einen gewünschten Mahlgrad festlegenden relativen Axialstellung zwischen den relativ zueinander verdrehbaren Mahlelementen (56, 58) vermittels des Stabelements (44). Hierbei ist erfindungsgemäß vorgesehen, dass die Einstellvorrichtung (26) einen in einer Aussparung (24) im Mühlenkopf (18) untergebrachten, am Mühlenkopf (18) axial abstützbaren und relativ zum Mühlenkopf (18) verdrehbaren Einsatz (34) aufweist, welcher derart mit dem Stabelement (44) und dem Mühlenkopf (18) gekoppelt oder koppelbar ist, dass durch Verdrehung des Einsatzes (34) relativ zum Mühlenkopf (18) der Einsatz (34) und damit das Stabelement (44) axial verstellbar ist, um den Mahlgrad zu verstellen.

## Beschreibung

Die vorliegende Erfindung betrifft eine Mühle zum Zerkleinern von Gewürzen, insbesondere von Pfeffer, Salz oder dergleichen, mit einem Aufnahmebehälter für ungemahlenes Gewürz, mit einem in dem Aufnahmebehälter drehbar angeordneten, eine Drehachse definierenden Stabelement, mit einem relativ zum Aufnahmebehälter drehbar angeordneten Mühlenkopf, welcher mit dem Stabelement zur gemeinsamen Drehung gekoppelt oder koppelbar ist, mit einem vom Mühlenkopf entfernt angeordneten Mahlwerk mit wenigstens zwei relativ zueinander beweglichen Mahlelementen, von denen wenigstens eines vermittels des Stabelements relativ zu wenigstens einem anderen der Mahlelemente verdrehbar ist, und mit einer Einstellvorrichtung zur Einstellung einer einen gewünschten Mahlgrad festlegenden relativen Axialstellung zwischen den relativ zueinander verdrehbaren Mahlelementen vermittels des Stabelements.

In der einfachsten und bekanntesten Ausführungsform ist eine solche Mahlgradeinstellvorrichtung durch eine mit dem Stabelement außerhalb des Mühlenkopfes verschraubten, so genannten Kopfschraube realisiert, wobei das Lösen dieser Kopfschraube eine axiale Bewegung des Stabelements zum Mahlwerk hin erlaubt, wodurch eine Veränderung des Mahlgrads, in der Regel in Richtung einer gröberen Mahlgradeinstellung, ermöglicht wird. Ferner ist es bekannt, dass eine Einstellvorrichtung an anderen Stellen der Mühle, insbesondere am Aufnahmebehälter, beispielsweise im Bereich des Mahlwerks, angeordnet sind. Auch ein solcher Mühlentyp weist in der Regel eine Kopfschraube auf, welche jedoch nur dazu dient, den Mühlenkopf auf dem Stabelement axial zu fixieren.

Die bekannten Mahlgrad-Einstellvorrichtungen weisen einige Nachteile auf. So ist es bei einer Kopfschrauben-Einstellvorrichtung nur dann möglich, nach einer Wiederbefüllung der Mühle mit ungemahlenem Gewürz den gleichen Mahlgrad wie vor der Befüllung zu erreichen, wenn sich die die Mühle verwendende Person gemerkt hat, durch wie viele Umdrehungen sie die Kopfschraube vom Stabelement gelöst hat. Um den exakten Mahlgrad wieder einstellen zu können, müsste die Kopfschraube dann mit der entsprechend gemerkten Zahl an Umdrehungen auf das Stabelement wieder aufgeschraubt werden. Ferner führt das Einstellen eines groben Mahlgrads durch Lösen der Kopfschraube zu einer Lockerung des Mühlenkopfes, so dass sich dieser beim Betätigen der Mühle in axialer Richtung bewegen kann.

Bei Einstellvorrichtungen, die am Aufnahmebehälter vorgesehen sind, und die in der Regel auch eine Anzeige des momentan eingestellten Mahlgrades aufweisen, ist es nachteilig, dass beim Betätigen der Pfeffermühle die Mahlgradeinstellung für die die Mühle verwendende Person nicht ohne weiteres ablesbar ist, da die Anzeige in der Regel auf der Umfangsfläche des Aufnahmebehälters angeordnet ist, und so beim Festhalten von einer Hand ggf. abgedeckt oder die Sicht hierauf wenigstens teilweise verdeckt ist. Die Mahlgradeinstellung ist besonders dann sehr umständlich und beim Verwenden der Mühle überhaupt nicht abzulesen, wenn die Einstellvorrichtung nur von unten her zugänglich ist, d. h. von dem Ende der Mühle, aus dem das gemahlene Gewürz herausrieselt.

Es ist daher Aufgabe der Erfindung, eine bekannte Mühle zum Zerkleinern von Gewürzen im Hinblick auf die Einstellbarkeit des Mahlgrades zu verbessern.

Hierzu schlägt die Erfindung vor, dass die Einstellvorrichtung einen in einer Aussparung im Mühlenkopf untergebrachten, am Mühlenkopf axial abstützbaren und relativ zum Mühlenkopf verdrehbaren Einsatz aufweist, welcher derart mit dem Stabelement und dem Mühlenkopf gekoppelt oder koppelbar ist, dass durch Verdrehung des Einsatzes relativ zum Mühlenkopf der Einsatz und damit das Stabelement axial verstellbar ist, um den Mahlgrad zu verstellen.

Eine solche Grundanordnung für eine im Mühlenkopf untergebrachte Einstellvorrichtung ermöglicht es, ein kürzeres Stabelement zu verwenden, da dieses nicht durch den Mühlenkopf hindurch treten muss, um mit einer außerhalb des Mühlenkopfes aufgeschraubten Kopfschraube verbunden zu werden. Ein solches verkürztes Stabelement führt zu einer Materialeinsparung verglichen mit einem Stabelement einer gleich großen bekannten Mühle mit Kopfschraube. Ferner kann eine moderne und ansprechende Gestaltung der Mühle ermöglicht werden, bei der auf die traditionelle Kopfschraube verzichtet werden kann.

Es wird vor allem daran gedacht, dass der Einsatz derart mit dem Mühlenkopf gekoppelt oder koppelbar ist, dass durch Verdrehung des Einsatzes relativ zum Mühlenkopf der Einsatz axial innerhalb der Aussparung verstellbar ist, und dass das Stabelement mit dem Einsatz zur gemeinsamen Axialverstellung gekoppelt oder koppelbar ist.

Hierzu wird weiterbildend vorgeschlagen, dass ein gesondertes Mitnahmeelement vorgesehen ist, mittels welchem das Stabelement mit dem Einsatz zur gemeinsamen Axialverstellung gekoppelt oder koppelbar ist.

Der Einsatz weist an seinem dem Aufnahmebehälter zugewandten Ende vorzugsweise einen Boden mit einer Öffnung auf, durch die ein oberer Endabschnitt des Stabelements in den Einsatz eingeführt oder einführbar ist.

Hierbei ist es bevorzugt, dass an dem oberen Endabschnitt des Stabelements das vorzugsweise zylindrisch ausgebildete Mitnahmeelement lösbar befestigt oder befestigbar ist, an dessen dem Aufnahmebehälter zugewandte Seite der Boden des Einsatzes zur Axialmitnahme angreift. Die Befestigung des Mitnahmeelements am oberen Endabschnitt des Stabelements erfolgt vorzugsweise über eine Schraubverbindung, so dass die beiden Teile miteinander verschraubt oder verschraubbar sind.

In diesem Zusammenhang ist es gewünscht, dass eine vorgegebene axiale Position des Mitnahmeelements an dem Stabelement durch einen am oberen Endabschnitt des Stabelements oder/und am Mitnahmeelement ausgebildeten Anschlag definiert ist.

Die vorgegebene axiale Position des Mitnahmeelements auf dem Stabelement ermöglicht es, dass das Stabelement und das Mitnahmeelement im korrekt zusammengesetzten Zustand eine immer gleiche Relativposition zueinander aufweisen. Somit ist die Axialverstellung des Stabelements und des Mitnahmeelements zur Mahlgradverstellung immer gleich und wird durch die Verdrehung des Einsatzes bestimmt, auf dessen Boden das Mitnahmeelement abgestützt ist.

Besonders bevorzugt ist es, dass bei Verstellung der relativen Axialstellung der relativ zueinander verdrehbaren Mahlelemente der Mühlenkopf und der Aufnahmebehälter axial in gleicher Relativposition zueinander bleiben.

Um den in der Aussparung des Mühlenkopfes untergebrachten Einsatz in Drehung zu versetzen, wird vorgeschlagen, dass die Einstellvorrichtung ein relativ zum Mühlenkopf verstellbares, vorzugsweise um die Drehachse verdrehbares, Betätigungselement aufweist, welches mit dem Einsatz in Drehmitnahmeverbindung steht oder bringbar ist.

Hierbei ist es besonders bevorzugt, dass das Betätigungselement für eine Verdrehung ohne seine Axialverstellung relativ zum Mühlenkopf an diesem gelagert oder lagerbar ist.

Eine solche Lagerung des Betätigungselements am Mühlenkopf verhindert somit, dass das Betätigungselement in axialer Richtung entweder weiter in die Aussparung im Mühlenkopf eindringt oder ähnlich zu einer bekannten Kopfschraube über den Mühlenkopf hervorsteht.

Der Einsatz und das Betätigungselement können jeweils eine einander zugeordnete Positionierungs- und Drehmitnahmeeinrichtung aufweisen, die derart ausgestaltet sind, dass die Herstellung der Drehmitnahmeverbindung die Einstellung genau einer relativen Drehstellung zwischen dem Einsatz un dem Betätigungselement bedingt.

Bei einer solchen Positionierungs- und Drehmitnahmeeinrichtung wird insbesondere daran gedacht, dass es sich um wenigstens eine Nut und wenigstens ein Vorsprung handelt, die am Einsatz bzw. am Betätigungselement vorgesehen sind. Bei der Ausbildung von mehreren Nuten und korrespondierenden Vorsprüngen auf den sich gegenüberliegenden Innen- bzw. Außenumfangsflächen des Einsatzes und des Betätigungselements, insbesondere zur stabileren Drehmitnahmeverbindung, sind diese Nuten und Vorsprünge derart unregelmäßig auf den Umfang zu verteilen, dass die Eindeutigkeit der relativen Drehstellung zwischen dem Einsatz und dem Betätigungselement gewährleistet ist.

Damit das Befüllen des Aufnahmebehälters möglichst einfach ist, wird vorgeschlagen, dass das Betätigungselement in genau einer vorgegebenen Drehstellung relativ zum Einsatz in axialer Richtung lösbar auf diesen aufgesteckt oder aufsteckbar ist.

Hierdurch kann das Betätigungselement von einer die Mühle verwendenden Person einerseits leicht entfernt werden und andererseits in genau einer vorgegebenen Drehstellung relativ zum Einsatz wieder aufgesetzt werden.

Damit der Einsatz innerhalb der Aussparung im Mühlenkopf drehbar und axial verstellbar ist, wird vorgeschlagen, dass der Einsatz vorzugsweise ein Außengewinde bildende Rampenmittel aufweist, welche mit vorzugsweise ein Innengewinde bildenden Rampenmitteln des Mühlenkopfes in eine Drehbewegung in eine Axialbewegung umsetzendem Eingriff stehen oder bringbar sind.

Ferner ist es bevorzugt, dass die Mühle eine direkt oder indirekt auf das Stabelement wirkende, direkt oder indirekt am Aufnahmebehälter abstützbare Federanordnung aufweist, mittels welcher das Stabelement in eine vorgegebene Richtung, vorzugsweise in Richtung zum Mahlwerk, axial vorgespannt oder vorspannbar ist.

Durch das Zusammenwirken der Federanordnung, des Stabelements, des Mitnahmeelements und des bezüglich des Mühlenkopfes axial festgelegten Einsatzes wird der Mühlenkopf auf den Aufnahmebehälter gezogen, wodurch eine Lockerung des Mühlenkopfes in axialer Richtung vom Aufnahmebehälter aufgrund einer Verstellung des Mahlgrades ausgeschlossen ist.

Betreffend den Antrieb des Mahlwerks wird vorgeschlagen, dass der Mühlenkopf mit dem Stabelement in Drehmitnahmeverbindung steht oder bringbar ist. Hierbei wird insbesondere daran gedacht, dass die Drehmitnahmeverbindung durch Aufsetzen des Mühlenkopfes auf das Stabelement herstellbar ist.

Die relative Axialstellung der zueinander drehbaren Mahlelementen, welche den Mahlgrad des Gewürzes festlegt, kann stufenlos oder in vorbestimmten Stufen durch die Einstellvorrichtung einstellbar sein.

Um den eingestellten Mahlgrad für eine die Mühle verwendende Person zu visualisieren, wird vorgeschlagen, dass auf dem Mühlenkopf oder/und an der Einstellvorrichtung, vorzugsweise an deren Betätigungselement, eine den momentanen Mahlgrad kennzeichnende Anzeige vorgesehen ist.

Eine solche Anzeige kann durch eine Skala und eine auf die Skala weisende Markierung gebildet sein, wobei das Betätigungselement und der Mühlenkopf jeweils entweder die Skala oder die Markierung aufweisen.

Eine solche Anzeige, welche auf der Oberseite des Mühlenkopfes angeordnet ist, kann sowohl beim Festhalten der Mühle mit einer Hand am Aufnahmebehälter als auch beim Ausführen der Verdrehung des Mühlenkopfes mit der anderen Hand jederzeit abgelesen werden. Hierbei ist es besonders vorteilhaft, dass die Mühle zur Ablesung des eingestellten Mahlgrades nicht als Ganzes in der Hand so lange gedreht oder ggf. auf den Kopf gestellt werden muss, bis eine auf dem Mühlenumfang oder ggf. unten am Mahlwerk angebrachte Anzeige, insbesondere deren Ablesemarkierung, sichtbar ist, weil der Mahlgrad bei der auf dem Mühlenkopf bzw. an der Einstellvorrichtung angebrachten Anzeige in einfacher Weise von oben ablesbar ist.

Um einen möglichst großen Bereich unterschiedlicher Mahlgrade zu erreichen, wird vorgeschlagen, dass die relative Axialstellung der relativ zueinander verdrehbaren Mahlelemente ausgehend von einer den geringsten Mahlgrad festlegenden relativen Axialstellung um etwa 2 mm bis 6 mm, vorzugsweise um 4 mm, durch die Einstellvorrichtung verstellbar ist.

Selbstverständlich kann der Verstellbereich der relativen Axialstellung auch je nach Verwendungszweck der Mühle, insbesondere je nach dem zu mahlenden Gewürz, noch größer oder ggf. auch kleiner gewählt werden.

Nachfolgend wird die Erfindung anhand einer in den Figuren dargestellten, beispielhaften Ausführungsform beschrieben.
- Fig. 1: ist eine perspektivische Ansicht einer Ausführungsform der Mühle.
- Fig. 2: ist eine seitliche Draufsicht auf die Mühle aus der Richtung des Pfeils II der Fig. 1.
- Fig. 3: ist eine Querschnittsdarstellung entlang der Linie III-III der Fig. 2.
- Fig. 4: ist eine Querschnittssdarstellung gemäß der Linie IV-IV der Fig. 5.
- Fig. 5: ist eine Draufsicht von oben auf die Mühle, insbesondere auf ein im Mühlenkopf eingesetztes Betätigungselement einer Einstellvorrichtung.

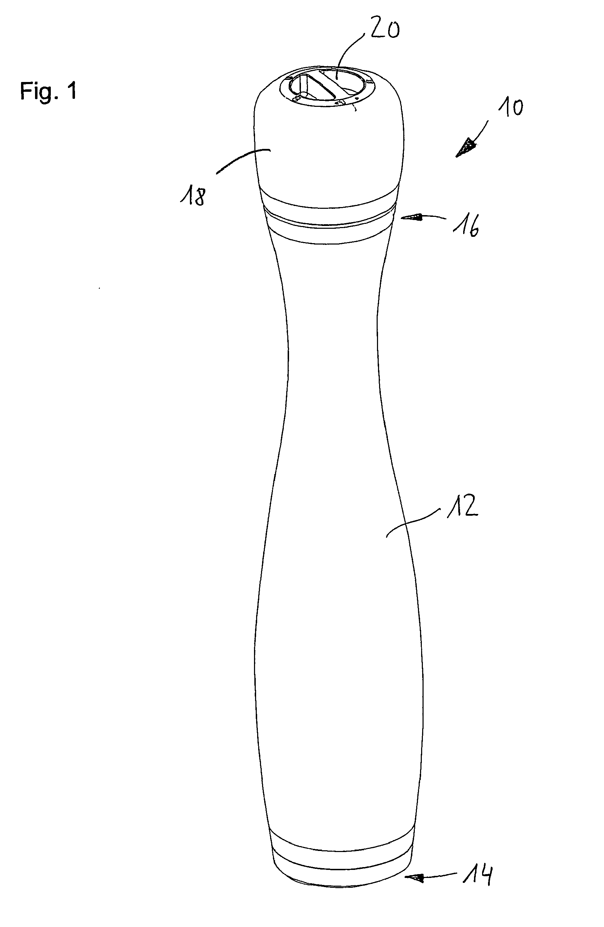

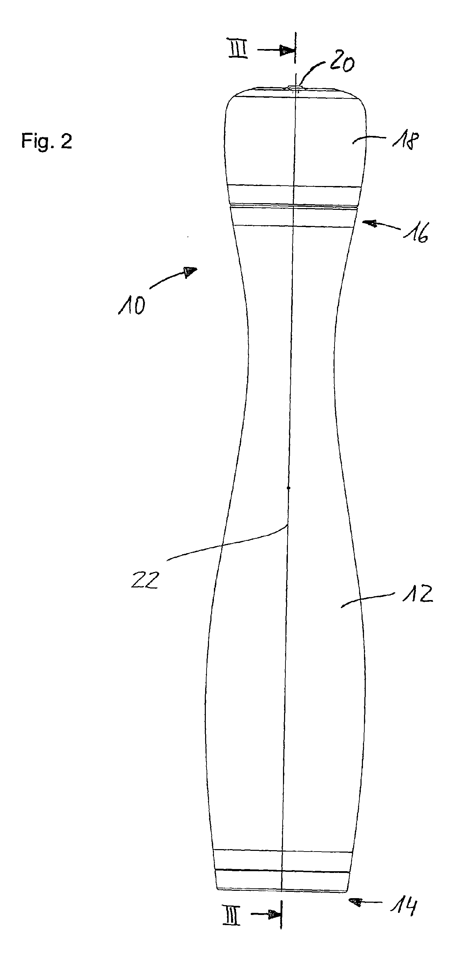

In der Fig. 1 ist eine als Pfeffermühle ausgebildete Gewürzmühle 10, welche nachfolgend auch nur als Mühle angesprochen ist, perspektivisch dargestellt. Die Mühle 10 weist einen Aufnahmebehälter 12 auf, der an seinem unteren Ende 14 eine nicht dargestellte Öffnung aufweist, aus der gemahlenes Gewürz herausrieseln kann. Auf einem oberen Ende 16 des Aufnahmebehälters 12 ist ein Mühlenkopf 18 aufgesetzt, der relativ zum Aufnahmekörper verdrehbar ist. Der Mühlenkopf 18 weist an seiner Oberseite ein Betätigungselement 20 auf, durch das eine im Mühlenkopf 18 untergebrachte Einstellvorrichtung zur Einstellung eines gewünschten Mahlgrades verstellt werden kann. Alle zur Mühle zugehörigen Bauteile, welche drehbar sind, können in dieser Ausführungsform um die in der Fig. 2 dargestellte Drehachse 22 verdreht werden.

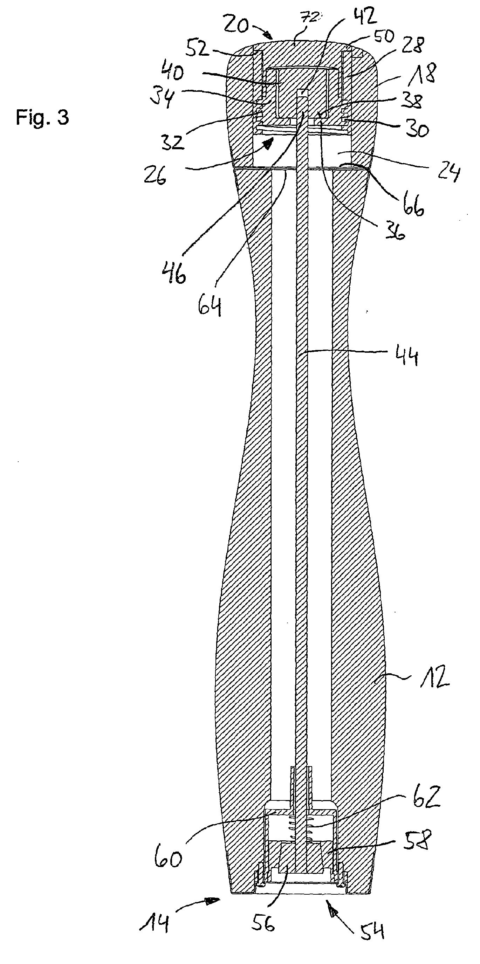

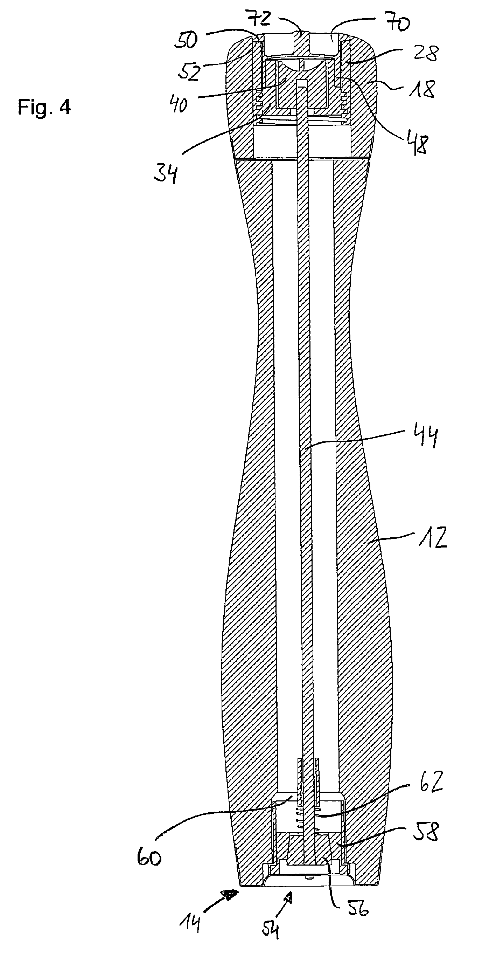

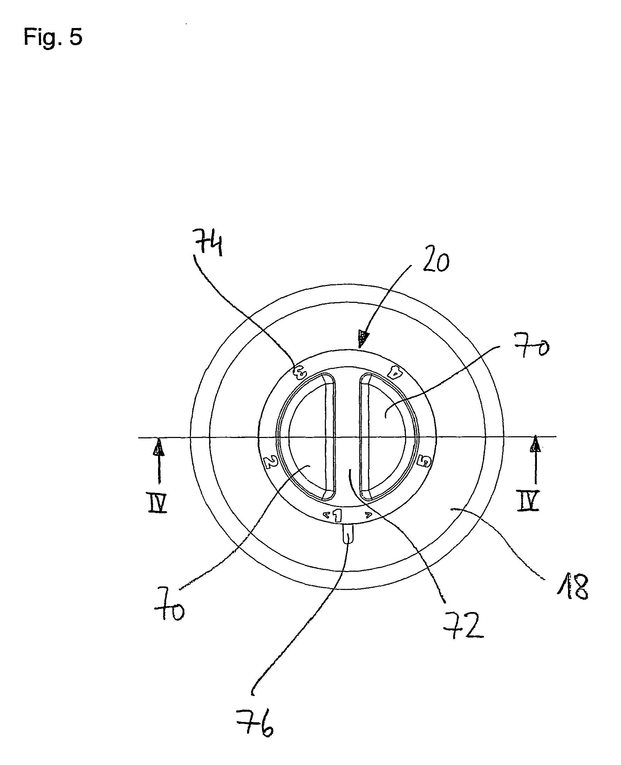

Die Mühle 10 ist in den Fig. 3 und 4 in zwei Schnittdarstellungen gezeigt, wobei die Fig. 3 einen Schnitt entlang der Linie III-III zeigt, und die Fig. 4 einen Schnitt zeigt, gemäß der Linie IV-IV der Fig. 5, wobei die Schnittebenen der Fig. 3 und 4 bezogen auf die Drehachse 22 orthogonal zueinander liegen.

In der Fig. 3 ist eine im Mühlenkopf 18 vorgesehene Aussparung 24 ersichtlich, in der eine Einstellvorrichtung 26 zur Verstellung des Mahlgrades untergebracht ist. Die Einstellvorrichtung 26 weist eine drehfest mit dem Mühlenkopf 18 verbundene Buchse 28 auf, die in einem unteren Bereich ein Innengewinde 30 aufweist. Mit dem Innengewinde 30 steht ein Außengewinde 32 eines hülsenartigen Einsatzes 34 in Eingriff. Der Einsatz 34 weist eine im Wesentlichen hohlzylindrische Form auf, wobei an seinem unteren Ende ein radial zur Drehachse vorstehender Ringvorsprung 36 ausgebildet ist. Dieser Ringvorsprung 36 bildet zur Innenseite des Einsatzes 34 eine Auflagefläche 38, auf der ein ebenfalls zylindrisch ausgebildetes Mitnahmeelement 40 aufliegt. Dieses Mitnahmeelement 40 weist eine mit einem Innengewinde versehene koaxial zur Drehachse ausgebildete Öffnung 42 auf, in die ein zur Drehachse koaxiales Stabelement 44 mit seinem oberen Ende 46 eingeschraubt ist. Auf den Einsatz 34 ist das Betätigungselement 20 aufgesteckt, wobei das Betätigungselement 20 an seiner Innenumfangsfläche einen Vorsprung 48 (siehe Fig. 4) aufweist, der in eine korrespondierende Nut in der Außenumfangsfläche des Einsatzes 34 eingreift zur Herstellung der Drehmitnahmeverbindung. Das Betätigungselement 20 liegt in seinem äußeren Randbereich 50 auf dem oberen Rand 52 der Buchse 28 auf, so dass das Betätigungselement 20 im Wesentlichen bündig mit dem Mühlenkopf 28 abschließt. Hierdurch ist das Betätigungselement 20 relativ zum Mühlenkopf 18 axial festgelegt und wird bei seiner Verdrehung nicht axial verstellt.

Das Stabelement 44 erstreckt sich vom Mühlenkopf 18 durch den gesamten Aufnahmebehälter 12 bis zu einem Mahlwerk 54, das zwei zueinander bewegliche Mahlelemente 56, 58 umfasst, wobei das Mahlelement 58 fest mit dem Aufnahmekörper 12 verbunden ist und das Mahlelement 56 mit dem Stabelement 44 zur gemeinsamen Verdrehung gekoppelt ist. Zur radialen Stabilisierung des Stabelements 44 ist ein Führungselement 60 vorgesehen, das am Aufnahmebehälter 12 befestigt ist. Zwischen dem Mahlelement 56 und dem Führungselement 60 ist eine Schraubenfeder 62 um das Stabelement 44 herum angebracht, welche derart vorgespannt ist, dass sie das Mahlelement 56 und somit das Stabelement 54 zum unteren Ende 14 des Aufnahmebehälters 12 drückt. Dieser Vorspannkraft wirkt die axiale Festlegung des Stabelements über das Mitnahmeelement 40, den Einsatz 34 und die Gewindeverbindung 30, 32 mit der Buchse 28 entgegen, so dass einerseits die beiden Mahlelemente 56, 58 in einer gewünschten Relativstellung zueinander bleiben, und dass andererseits der Mühlenkopf 18 in Richtung des Aufnahmebehälters 12 gezogen wird und somit axial im Wesentlichen unverschieblich auf diesem aufliegt.

Die in den Fig. 3 und 4 dargestellte relative Axialstellung der beiden Mahlelemente 56, 58 entspricht dem feinsten Mahlgrad. Hierbei befindet sich der Einsatz 34 an seiner axial höchsten Position in der Aussparung 26. Wird das Betätigungselement 20 nun in entsprechender Richtung verdreht, wird aufgrund des Drehmitnahmeeingriffs an der Nut 48 der Einsatz 34 ebenfalls verdreht, wobei er sich axial zum Aufnahmebehälter 12 hin bewegt. Aufgrund der Vorspannkraft der Feder 62 wird dabei das Mitnahmeelement 40 in Berührung mit dem Boden 38 des Einsatzes 34 gehalten, wodurch sich das Mitnahmeelement 40 in die gleiche Richtung bewegt, was dazu führt, dass sich das Stabelement 44 und somit auch das Mahlelement 56 zum unteren Ende 14 des Aufnahmebehälters 12 hin bewegen, wodurch die relative Axialstellung zwischen den beiden Mahlelementen 56, 58 verstellt wird, d. h. in diesem Falle wird ein Mahlspalt zwischen den beiden Mahlelementen 56, 58 vergrößert, so dass ein gröberer Mahlgrad erreicht wird.

Bei Verdrehung des Betätigungselements 20 in die andere Richtung bewegt sich der Einsatz 34 nach oben und nimmt das Mitnahmeelement 40 samt Stabelement 44 und Mahlelement 56 entgegen der Vorspannkraft der Feder 62 mit, um hierdurch den Mahlgrad feiner einzustellen. Es ist darauf hinzuweisen, dass die axiale Länge des Vorsprungs 48 und der korrespondierenden Nut auf dem Einsatz 34 so gewählt sind, dass sie trotz ihrer axialen relativen Verschiebung zueinander in jeder Mahlgradeinstellung miteinander in Eingriff sind bzw. in Eingriff bringbar sind.

Wenn die Mühle 10 mit Gewürz befüllt werden soll, wird zuerst das Betätigungselement 20 vom Einsatz 34 abgezogen. Anschließend wird das auf das Stabelement 44 aufgeschraubte Mitnahmeelement 40 vom Stabelement 44 abgeschraubt. Hierdurch wird der Mühlenkopf 18 samt Buchse 28 und damit verschraubtem Einsatz 34 freigegeben und kann vom Aufnahmebehälter 12 abgenommen werden, wodurch eine in einer Abdeckplatte 64 des Aufnahmebehälters 12 ausgebildete Öffnung, ggf. mehrere Öffnungen, freigegeben wird bzw. werden, durch die Gewürz in den Aufnahmebehälter 12 eingegeben werden kann. Nach dem Befüllen wird der Mühlenkopf 18 samt Buchse 28 und Einsatz 34 wieder auf den Aufnahmekörper 12 aufgesetzt, wobei das Stabelement 44 durch eine in einem Boden 66 des Mühlenkopfs 18 ausgebildete Öffnung in den Mühlenkopf 18 und somit in den Einsatz 34 eingeführt wird. Anschließend wird das Mitnahmeelement 40 wieder auf das Stabelement 44 aufgeschraubt und zwar bis das Mitnahmeelement 40 an einem durch die Gewindelänge oder/und eine Profiländerung des Stabelements 44, insbesondere Übergang vom Gewinde zu einem Vierkantprofil, in Anschlag kommt. Eine solche Anordnung des Mitnahmeelements 40 am Stabelement 46 ermöglicht es, dass durch die definierte Relativstellung des Mitnahmeelements 40 zum Stabelement 46 diese beiden Bauteile eine Einheit bilden, welche stets die gleiche axiale Länge aufweist und auf dem Einsatz 34 aufliegt. Dies führt in vorteilhafter Weise dazu, dass der Mahlgrad auch nach dem Befüllen wieder demjenigen Mahlgrad entspricht, bevor die Pfeffermühle geöffnet worden ist, weil die Einstellung des Mahlgrades von der axialen Position des Einsatzes 34 bestimmt ist, der beim Befüllen der Pfeffermühle nicht verstellt wird und somit seine Position innerhalb des Mühlenkopfes 18 nicht verändert.

Es ist noch darauf hinzuweisen, dass das Stabelement zumindest in Abschnitten, in denen es mit anderen Bauteilen, beispielsweise dem Boden 66 des Mühlenkopfes 18 oder in einem Verbindungsbereich mit dem Mahlelement 56 vorzugsweise ein Profil aufweist, das eine gemeinsame Drehmitnahme ermöglicht. Es wird hierbei insbesondere an ein Vierkantprofil gedacht.

Das zur Einstellung des gewünschten Mahlgrades vorgesehene Betätigungselement 20 weist gemäß der Fig. 5 zwei Aussparungen 70 auf, welche durch einen Steg 72 voneinander getrennt sind. Der Steg 72 kann beispielsweise durch Daumen und Zeigefinger einer Hand ergriffen werden, so dass das Betätigungselement 20 verdreht werden kann, um den Mahlgrad einzustellen. In Umfangsrichtung ist auf dem Betätigungselement 20 eine Skala 74 beispielsweise mit den Zahlen 1 bis 5 aufgedruckt, eingraviert oder in sonst einer geeigneten Weise aufgebracht. Durch Verdrehung des Betätigungselements 20 werden die Zahlen der Skala 74 an einer Markierung 76, welche auf dem Mühlenkopf 18 ausgebildet ist, vorbeibewegt, wobei an der Markierung der eingestellte Mahlgrad ablesbar ist. Die Skala 74 und die Markierung 76 bilden zusammen eine Anzeige für den momentan eingestellten Mahlgrad. Selbstverständlich könnte die Markierung auch auf dem Betätigungselement und die Skala auf dem Mühlenkopf angebracht sein. Die Verstellung des Betätigungselements 20 erfolgt im dargestellten Ausführungsbeispiel stufenlos, so dass auch Zwischenpositionen zwischen den einzelnen Zahlen der Skala 74 möglich sind. Es ist aber auch denkbar, dass das Betätigungselement stufenweise verstellt werden kann, wobei hierzu geeignete leicht lösbare Rastverbindungen zwischen dem Betätigungselement 20 und dem Mühlenkopf 18 bzw. der Buchse 28 vorzusehen wären.

Abschließend ist noch darauf hinzuweisen, dass der axiale Verstellweg des Einsatzes 34 und somit des Mahlelements 56 etwa 4 mm beträgt, wobei dieser Verstellweg je nach Mühlenart auch größer oder kleiner sein kann.

## Patentansprüche

1. Mühle zum Zerkleinern von Gewürzen, insbesondere von Pfeffer, Salz oder dergleichen, umfassend:
einen Aufnahmebehälter (12) für ungemahlenes Gewürz;
ein in dem Aufnahmebehälter (12) drehbar angeordnetes, eine Drehachse (22) definierendes Stabelement (44);
einen relativ zum Aufnahmebehälter (12) drehbar angeordneten Mühlenkopf (18), welcher mit dem Stabelement (44) zur gemeinsamen Drehung gekoppelt oder koppelbar ist;
ein vom Mühlenkopf (18) entfernt angeordnetes Mahlwerk (54) mit wenigstens zwei relativ zueinander beweglichen Mahlelementen (56, 58), von denen wenigstens eines (56) vermittels des Stabelements (44) relativ zu wenigstens einem anderen der Mahlelemente (58) verdrehbar ist; und
eine Einstellvorrichtung (26) zur Einstellung einer einen gewünschten Mahlgrad festlegenden relativen Axialstellung zwischen den relativ zueinander verdrehbaren Mahlelementen (56, 58) vermittels des Stabelements (44),
**dadurch gekennzeichnet, dass**
die Einstellvorrichtung (26) einen in einer Aussparung (24) im Mühlenkopf (18) untergebrachten, am Mühlenkopf (18) axial abstützbaren und relativ zum Mühlenkopf (18) verdrehbaren Einsatz (34) aufweist, welcher derart mit dem Stabelement (44) und dem Mühlenkopf (18) gekoppelt oder koppelbar ist, dass durch Verdrehung des Einsatzes (34) relativ zum Mühlenkopf (18) der Einsatz (34) und damit das Stabelement (44) axial verstellbar ist, um den Mahlgrad zu verstellen.

2. Mühle nach Anspruch 1, **dadurch gekennzeichnet, dass** der Einsatz (34) derart mit dem Mühlenkopf (18) gekoppelt oder koppelbar ist, dass durch Verdrehung des Einsatzes (34) relativ zum Mühlenkopf (18) der Einsatz (34) axial innerhalb der Aussparung (24) verstellbar ist, und dass das Stabelement (44) mit dem Einsatz (34) zur gemeinsamen Axialverstellung gekoppelt oder koppelbar ist.

3. Mühle nach Anspruch 2, **dadurch gekennzeichnet, dass** ein gesondertes Mitnahmeelement (40) vorgesehen ist, mittels welchem das Stabelement (44) mit dem Einsatz (34) zur gemeinsamen Axialverstellung gekoppelt oder koppelbar ist.

4. Mühle nach einem der Ansprüche 1 bis 3, **dadurch gekennzeichnet, dass** der Einsatz (34) an seinem dem Aufnahmebehälter (12) zugewandten Ende einen Boden (36) mit einer Öffnung aufweist, durch die ein oberer Endabschnitt (46) des Stabelements (44) in den Einsatz (34) eingeführt oder einführbar ist.

5. Mühle nach Anspruch 4, **dadurch gekennzeichnet, dass** an dem oberen Endabschnitt (46) des Stabelements (44) das vorzugsweise zylindrisch ausgebildete Mitnahmeelement (40) lösbar befestigt oder befestigbar ist, an dessen dem Aufnahmebehälter (12) zugewandte Seite der Boden (36) des Einsatzes (34) zur Axialmitnahme angreift.

6. Mühle nach Anspruch 4 oder 5, **dadurch gekennzeichnet, dass** das Mitnahmeelement (40) mit dem oberen Endabschnitt (46) des Stabelements (44) verschraubt oder verschaubbar ist.

7. Mühle nach einem der Ansprüche 4 bis 6, **dadurch gekennzeichnet, dass** eine vorgegebene axiale Position des Mitnahmeelements (40) an dem Stabelement (44) durch einen am oberen Endabschnitt (46) des Stabelements (44) oder/und am Mitnahmeelement (40) ausgebildeten Anschlag definiert ist.

8. Mühle nach Anspruch einem der Ansprüche 1 bis 7, **dadurch gekennzeichnet, dass** bei Verstellung der relativen Axialstellung der relativ zueinander verdrehbaren Mahlelemente (56, 58) der Mühlenkopf (18) und der Aufnahmebehälter (12) axial in gleicher Relativposition zueinander bleiben.

9. Mühle nach einem der Ansprüche 1 bis 8, **dadurch gekennzeichnet, dass** die Einstellvorrichtung (26) ein relativ zum Mühlenkopf (18) verstellbares, vorzugsweise um die Drehachse (22) verdrehbares, Betätigungselement (20) aufweist, welches mit dem Einsatz (34) in Drehmitnahmeverbindung steht oder bringbar ist.

10. Mühle nach Anspruch 9, **dadurch gekennzeichnet, dass** das Betätigungselement (20) für eine Verdrehung ohne seine Axialverstellung relativ zum Mühlenkopf (18) an diesem gelagert oder lagerbar ist.

11. Mühle nach einem der Ansprüche 9 oder 10, **gekennzeichnet durch** eine Positionierungs- und Drehmitnahmeeinrichtung des Einsatzes (34) und eine zugeordnete Positionierungs- und Drehmitnahmeeinrichtung (48) des Betätigungselements (20), die derart ausgestaltet sind, dass die Herstellung der Drehmitnahmeverbindung die Einstellung genau einer relativen Drehstellung zwischen dem Einsatz (34) und dem Betätigungselement (20) bedingt.

12. Mühle nach Anspruch 11, **dadurch gekennzeichnet, dass** das Betätigungselement (20) in genau einer vorgegebenen Drehstellung relativ zum Einsatz (34) in axialer Richtung lösbar auf diesen aufgesteckt oder aufsteckbar ist.

13. Mühle nach einem der vorhergehenden Ansprüche, **dadurch gekennzeichnet, dass** der Einsatz (34) vorzugsweise ein Außengewinde (32) bildende Rampenmittel aufweist, welche mit vorzugsweise ein Innengewinde (30) bildenden Rampenmitteln des Mühlenkopfes (18) in eine Drehbewegung in eine Axialbewegung umsetzendem Eingriff stehen oder bringbar sind.

14. Mühle einem der vorhergehenden Ansprüche, **gekennzeichnet durch** eine direkt oder indirekt auf das Stabelement (44) wirkende, direkt oder indirekt am Aufnahmebehälter (12) abstützbare Federanordnung (60, 62), mittels welcher das Stabelement (44) in eine vorgegebene Richtung, vorzugsweise in Richtung zum Mahlwerk (54), axial vorgespannt oder vorspannbar ist.

15. Mühle nach einem der vorhergehenden Ansprüche, **dadurch gekennzeichnet, dass** der Mühlenkopf (18) mit dem Stabelement (44) in Drehmitnahmeverbindung steht oder bringbar ist.

16. Mühle nach Anspruch 15, **dadurch gekennzeichnet, dass** die Drehmitnahmeverbindung durch Aufsetzen des Mühlenkopfes (18) auf das Stabelement (44) herstellbar ist.

17. Mühle nach einem der vorhergehenden Ansprüche, **dadurch gekennzeichnet, dass** die relative Axialstellung der zueinander verdrehbaren Mahlelemente (56, 58) stufenlos oder in vorbestimmten Stufen durch die Einstellvorrichtung (26) einstellbar ist.

18. Mühle nach einem der vorhergehenden Ansprüche, gegebenenfalls nach Anspruch 9, **dadurch gekennzeichnet, dass** auf dem Mühlenkopf (18) oder/und an der Einstellvorrichtung (26), vorzugsweise an deren Betätigungselement (20), eine den momentanen Mahlgrad kennzeichnende Anzeige (74, 76) vorgesehen ist.

19. Mühle nach Anspruch 18, **dadurch gekennzeichnet, dass** die Anzeige durch eine Skala (74) und eine auf die Skala (74) weisende Markierung (76) gebildet ist, wobei das Betätigungselement (20) und der Mühlenkopf (18) jeweils entweder die Skala (74) oder die Markierung (76) aufweisen.

20. Mühle nach einem der vorhergehenden Ansprüche, **dadurch gekennzeichnet, dass** die relative Axialstellung der relativ zueinander verdrehbaren Mahlelemente (56, 58) ausgehend von einer den geringsten Mahlgrad festlegenden relativen Axialstellung um etwa 2 mm bis 6 mm, vorzugsweise um 4 mm, durch die Einstellvorrichtung (26) verstellbar ist.
